# EUROPÄISCHE PATENTSCHRIFT

(11) **EP 2 664 019 B1**
(45) Veröffentlichungstag und Bekanntmachung des Hinweises auf die Patenterteilung: **31.07.2019**
(21) Anmeldenummer: 11790907.7
(22) Anmeldetag: 16.11.2011
(51) Int. Cl.: H01M 4/58, H01M 4/60, H01M 4/04, H01M 10/052, H01M 4/136, H01M 4/137, H01M 4/1397, H01M 4/36, H01M 4/62

(54) **KATHODENZUSAMMENSETZUNG**
CATHODE COMPOSITION
COMPOSITION DE CATHODE

(30) Priorität: 14.01.2011 DE 102011002720
(43) Veröffentlichungstag der Anmeldung: 20.11.2013
(73) Patentinhaber: Robert Bosch GmbH, 70442 Stuttgart (DE)
(72) Erfinder: WEGNER, Marcus, 71229 Leonberg (DE); TOMFORDE, Jan, 70193 Stuttgart (DE); HASENKOX, Ulrich, 71254 Ditzingen (DE); GRIMMINGER, Jens, 89250 Senden (DE); TENZER, Martin, 71701 Schwieberdingen (DE); LIEDTKE, Ralf, 70597 Stuttgart (DE)
(86) Internationale Anmeldenummer: PCT/EP2011/070274
(87) Internationale Veröffentlichungsnummer: WO 2012/095206

(56) Entgegenhaltungen:
- WO-A1-2010/044437
- JP-A- 2010 153 296
- LI WANG ET AL: "The electrochemical characteristics of sulfur composite cathode", IONICS, Bd. 16, Nr. 8, 8. Juni 2010 (2010-06-08), Seiten 689-695, XP55017223, ISSN: 0947-7047, DOI: 10.1007/s11581-010-0451-0
- WEIHUA PU ET AL: "Sulfur composite cathode materials: comparative characterization of polyacrylonitrile precursor", IONICS, Bd. 13, Nr. 4, 5. Juli 2007 (2007-07-05), Seiten 273-276, XP55017231, ISSN: 0947-7047, DOI: 10.1007/s11581-007-0101-3

## Beschreibung

Die vorliegende Erfindung betrifft eine Kathodenzusammensetzung für eine Alkali-Schwefel-Zelle, insbesondere Lithium-Schwefel-Zelle, ein Herstellungsverfahren für eine Kathode für eine Alkali-Schwefel-Zelle, sowie eine entsprechende Kathode und Alkali-Schwefel-Zelle.

### Stand der Technik

Um mit einem Elektrofahrzeug bei akzeptablem Batteriegewicht Reichweiten von über 200 km zu erzielen, wird ständig nach neuen Batteriematerialien und - technologien geforscht. Hierbei stellen Lithium-Schwefel-Zellen einen vielversprechenden Kandidaten dar. In Lithium-Schwefel-Zellen wird Schwefel während des Entladens über Polysulfide zum Lithiumsulfid reduziert. Beim Aufladen der Zelle findet umgekehrt die Oxidation des Sulfids zum Schwefel statt. Derzeit können mit Lithium-Schwefel-Zellen Energiedichten von bis zu 350 Wh/kg erzielt werden. Allerdings erreichen derartige Zellen meist nur eine Zyklenzahl von knapp über 100 Zyklen.

Eine Möglichkeit zur Verbesserung der Zyklenstabilität von Lithium-Ionen-Batterien wird zum Beispiel in der WO 2010/044437 A1 angegeben. In diesem Dokument wird ein Verfahren zur Herstellung eines Schwefel-modifizierten Polyacrylnitrils beschrieben, welches sich dadurch auszeichnet, dass Schwefel- und Polyacrylnitril-Pulver zusammengemischt und unter einer nicht oxidierenden Atmosphäre derart erhitzt werden, dass ein Abdampfen des Schwefels vermieden wird. Dieses Material kann als Kathodenmaterial für Lithiumbatterien Ver
wendung finden und soll derart einen gesteigerten Output und längere Lebensdauer ermöglichen.

### Offenbarung der Erfindung

Gegenstand der vorliegenden Erfindung ist eine Kathodenzusammensetzung für eine Alkali-Schwefel-Zelle umfassend elementaren Schwefel und mindestens einen, kovalent und/oder ionisch gebundenen Schwefel aufweisenden Polyacrylnitril-Schwefel-Kompositwerkstoff, dadurch gekennzeichnet, dass der Polyacrylnitril-Schwefel-Kompositwerkstoff Schwefelbereiche mit einem Durchmesser von weniger als 1000 nm aufweist.

Unter einem kovalent und/oder ionisch gebundenen Schwefel aufweisende Material kann im Sinn der vorliegenden Erfindung insbesondere ein Material verstanden werden, in dem Schwefel kovalent und/oder ionisch an ein anderes chemisches Element, insbesondere welches nicht Schwefel oder ein Alkalimetall, wie Lithium, ist, gebunden ist.

Vorzugsweise liegt das kovalent und/oder ionisch gebundenen Schwefel aufweisende Material beim Betreib der Alkali-Schwefel-Zelle als Feststoff vor. Insbesondere kann das kovalent und/oder ionisch gebundenen Schwefel aufweisende Material unlöslich in Alkali-Schwefel-Zellen-Elektrolyten, insbesondere in Lithium-Schwefel-Zellen-Elektrolyten, insbesondere bei der Betriebstemperatur der Alkali-Schwefel-Zelle, sein.

Durch die Beimischung des kovalent und/oder ionisch gebundenen Schwefel aufweisenden Materials werden Schwefelkeime, beispielsweise im Nanometer und Subnanometerbereich, in die Kathodenzusammensetzung eingebracht. Diese können vorteilhafterweise als Ausgangspunkt, insbesondere als Kristallisationskeime, für die Schwefelabscheidung beim Aufladevorgang dienen. Dadurch kann erzielt werden, dass sich der Schwefel während des Aufladevorgangs homogen und in kleinen Partikeln abscheidet. So kann vorteilhafterweise die Schwefelausnutzung verbessert, die mechanische Beanspruchung verringert und letztendlich die Zyklenstabilität verbessert werden.

Im Rahmen einer Ausführungsform ist das kovalent und/oder ionisch gebundenen Schwefel aufweisende Material ausgewählt aus der Gruppe bestehend aus Schwefel-Kompositwerkstoffen, schwefelhaltigen Polymeren, Metallsulfiden, Nichtmetallsulfiden und Kombinationen davon. Derartige Materialien haben sich als Schwefelabscheidungsbeschleuniger insbesondere als geeignet erwiesen. Unter einem Polymer werden im Sinn der vorliegenden Erfindung insbesondere organische Polymere beziehungsweise Polymere auf Kohlenstoffbasis verstanden.

Im Rahmen einer weiteren Ausführungsform ist das kovalent und/oder ionisch gebundenen Schwefel aufweisende Material ein Schwefel-Kompositwerkstoff.

Schwefel-Kompositwerkstoffe haben sich als Schwefelabscheidungsbeschleuniger als besonders vorteilhaft erwiesen.
Im Rahmen einer weiteren Ausführungsform weist das kovalent und/oder ionisch gebundenen Schwefel aufweisende Material, insbesondere der Schwefel-Kompositwerkstoff, eine durchschnittliche Primärpartikelgröße in einem Bereich von ≥ 5 nm bis ≤ 1000 nm, beispielsweise von ≥ 50 nm bis ≤ 500 nm, insbesondere gemessen mit Rasterelektronenmikroskopie (REM), auf. Die Primärpartikel können dabei zu größeren Sekundärpartikeln agglomeriert sein, welche bei der Kathodenherstellung zerfallen können.

Im Rahmen einer weiteren Ausführungsform weist der Schwefel-Kompositwerkstoff Schwefelbereiche mit einem durchschnittlichen Durchmesser von weniger als 1000 nm, insbesondere von weniger als 100 nm, beispielsweise von weniger als 1 nm, gegebenenfalls von weniger als 0,1 nm, beispielweise unterhalb der rasterelektronenmikroskopischen Nachweisgrenze, auf. Schwefelbereiche dieser Größe haben sich als Kristallisationskeime für die Schwefelabscheidung insbesondere als vorteilhaft erwiesen.

Im Rahmen einer weiteren Ausführungsform liegt der Schwefel des Schwefel-Kompositwerkstoffs in dem Schwefel-Kompositwerkstoff homogen verteilt vor. So kann vorteilhafterweise die Bildung von Schwefelagglomeraten verringert werden.

Im Rahmen einer weiteren Ausführungsform ist der Schwefel-Kompositwerkstoff, ein Schwefel-Polymer-Kompositwerkstoff. Schwefel-Polymer-Kompositwerkstoff habe sich als besonders vorteilhaft erwiesen, da Polymere kovalente Schwefel-Polymer-Bindungen ausbilden können und Schwefel-Polymer-Kompositwerkstoffe gut mit kleinen Schwefelbereichen, kleinen Partikelgrößen und einer homogenen Schwefelverteilung hergestellt werden können.

Im Rahmen einer weiteren Ausführungsform umfasst der Schwefel-Kompositwerkstoff einen Polyacrylnitril-Schwefel-Kompositwerkstoff. Insbesondere kann der Schwefel-Kompositwerkstoff ein Polyacrylnitril-Schwefel-Kompositwerkstoff sein. Polyacrylnitril-Schwefel-Kompositwerkstoffe weisen vorteilhafterweise eine sehr gute Zyklenstabilität und eine hohe Schwefelausnutzung auf. Zudem können Polyacrylnitril-Schwefel-Kompositwerkstoffe gut mit einer homogenen Schwefelverteilung im Subnanometer/Nanometerbereich im Polymergerüst hergestellt werden. Darüber hinaus ist der Schwefel in Polyacrylnitril-Schwefel-Kompositwerkstoff relativ ortsfest beziehungsweise kovalent im Kompositwerkstoff gebunden.

Im Rahmen einer weiteren Ausführungsform ist der Schwefel-Kompositwerkstoff, insbesondere Polyacrylnitril-Schwefel-Kompositwerkstoff, durch Erhitzen einer Mischung aus elementarem Schwefel und mindestens einem Polymer, insbesondere Polyacrylnitril, beispielsweise auf eine Temperatur in einem Bereich von ≥ 200 °C bis ≤ 800 °C hergestellt.

Im Rahmen einer weiteren Ausführungsform umfasst der Schwefel-Kompositwerkstoff, bezogen auf das Gesamtgewicht des Schwefel-Kompositwerkstoffs, ≥ 5 Gew.-% bis ≤ 80 Gew.-%, beispielsweise ≥ 20 Gew.-% bis ≤ 50 Gew.-%, Schwefel.

Insbesondere kann der Schwefel-Kompositwerkstoff, bezogen auf das Gesamtgewicht des Schwefel-Kompositwerkstoffs,
- ≥ 5 Gew.-% bis ≤ 80 Gew.-%, beispielsweise ≥ 20 Gew.-% bis ≤ 50 Gew.-%, Schwefel und
- ≥ 20 Gew.-% bis ≤ 95 Gew.-%, beispielsweise ≥ 50 Gew.-% bis ≤ 80 Gew.-%, an Polymer/en, insbesondere Polyacrylnitril,
umfassen oder daraus bestehen. Die Summe der Gewichtsprozentwerte von Polymeren und Schwefel kann dabei insbesondere insgesamt 100 Gewichtsprozent, bezogen auf das Gesamtgewicht des Schwefel-Kompositwerkstoffs, ergeben.

Im Rahmen einer weiteren Ausführungsform umfasst die Kathodenzusammensetzung weiterhin mindestens ein Bindemittel. Beispielsweise kann das mindestens eine Bindemittel ausgewählt sein aus der Gruppe bestehend aus Polyvinylidendifluorid (PVDF), Polyvinyldenfluoridhexafluoropropylen (PVDF-HFP), Polyethylenoxid (PEO), wasserlöslichen Bindemitteln, zum Beispiel Cellulose basierten Bindemitteln, und Kombinationen davon. Derartige Bindemittel haben sich für die erfindungsgemäße Kathodenzusammensetzung insbesondere als vorteilhaft erwiesen.

Im Rahmen einer weiteren Ausführungsform umfasst die Kathodenzusammensetzung weiterhin mindestens einen Leitzusatz. Beispielsweise der mindestens eine Leitzusatz ausgewählt sein aus der Gruppe bestehend aus Graphit, Ruß, Kohlenstoffnanoröhren, Kohlenstoffnanofasern, Aktivkohle und Kombinationen davon. Derartige Leitzusätze haben sich für die erfindungsgemäße Kathodenzusammensetzung insbesondere als vorteilhaft erwiesen.

Im Rahmen einer weiteren Ausführungsform umfasst die Kathodenzusammensetzung weiterhin mindestens ein Lösungsmittel. Beispielsweise kann das mindesten eine Lösungsmittel ausgewählt sein aus der Gruppe bestehend aus N-Methyl-2-pyrrolidinon (NMP), Dimethylsulfoxid (DMSO), Dimethylformamid (DMF), Dimethylacetamid (DMAC) und Kombinationen davon. Derartige Lösungsmittel haben sich für die erfindungsgemäße Kathodenzusammensetzung insbesondere als vorteilhaft erwiesen.

Die erfindungsgemäße Kathodenzusammensetzung kann insbesondere aus elementarem Schwefel, einem oder mehreren Bindemitteln, einem oder mehreren kovalent und/oder ionisch gebundenen Schwefel aufweisenden Materialien, beispielsweise Schwefel-Kompositwerkstoffen, einem oder mehreren Leitzusätzen und gegebenenfalls einem oder mehreren Lösungsmitteln bestehen.

Im Rahmen einer weiteren Ausführungsform umfasst die Kathodenzusammensetzung bezogen auf das Gesamtgewicht der Kathodenzusammensetzung
- ≥ 10 Gew.-% bis ≤ 80 Gew.-%, beispielsweise ≥ 15 Gew.-% bis ≤ 60 Gew.-%, an elementarem Schwefel, und/oder
- ≥ 5 Gew.-% bis ≤ 50 Gew.-%, beispielsweise ≥ 10 Gew.-% bis ≤ 25 Gew.-%, an Bindemitteln, und/oder
- ≥ 5 Gew.-% bis ≤ 50 Gew.-%, beispielsweise ≥ 10 Gew.-% bis ≤ 25 Gew.-%, an Leitzusätzen, und/oder
- ≥ 0,1 Gew.-% bis ≤ 50 Gew.-%, beispielsweise ≥ 1 Gew.-% bis ≤ 25 Gew.-%, an kovalent und/oder ionisch gebundenen Schwefel aufweisenden Materialien, insbesondere Schwefel-Kompositwerkstoffen, und/oder
- ≥ 0 Gew.-% bis ≤ 50 Gew.-%, beispielsweise ≥ 0 Gew.-% bis ≤ 25 Gew.-%, an Lösungsmitteln.
Die Summe der Gewichtsprozentwerte von elementarem Schwefel, Bindemitteln, Leitzusätzen und kovalent und/oder ionisch gebundenen Schwefel aufweisenden Materialien, insbesondere Schwefel-Kompositwerkstoffen, und gegebenenfalls Lösungsmitteln ergibt dabei insbesondere insgesamt 100 Gewichtsprozent, bezogen auf das Gesamtgewicht der Kathodenzusammensetzung. Gegebenenfalls kann die Kathodenzusammensetzung aus einer derartigen Zusammensetzung bestehen.

Ein weiterer Gegenstand der vorliegenden Erfindung ist ein Verfahren zur Herstellung einer Kathode für eine Alkali-Schwefel-Zelle, insbesondere Lithium-Schwefel-Zelle, umfassend den Verfahrensschritt a): Mischen von elementarem Schwefel, mindestens einem Bindemittel, mindestens einem kovalent und/oder ionisch gebundenen Schwefel aufweisenden Polyacrylnitril-Schwefel-Kompositwerkstoff, mindestens einem Leitzusatz und mindestens einem Lösungsmittel, Bereitstellen einer lösungsmittelhaltigen, erfindungsgemäßen Kathodenzusammensetzung.

Weiterhin umfasst das Verfahren den Verfahrensschritt b): Aufbringen, beispielsweise Rakeln, der Zusammensetzung, insbesondere aus Verfahrensschritt a), auf einen Stromableiter, zum Beispiel eine Metallfolie. Zum Beispiel kann auf den Stromableiter eine Schicht aufgebracht werden, welche eine Schichtdicke in einem Bereich von ≥ 20 µm bis ≤ 200 µm aufweist.

Darüber hinaus umfasst das Verfahren den Verfahrensschritt c): Trocknen der Anordnung, insbesondere aus Verfahrensschritt b). Das Trocknen kann beispielsweise bei einer Temperatur von über 50 °C, zum Beispiel unter Vakuum, erfolgen.

Ein weiterer Gegenstand der vorliegenden Erfindung ist eine Kathode für eine Alkali-Schwefel-Zelle, insbesondere Lithium-Schwefel-Zelle, welche aus einer erfindungsgemäßen Kathodenzusammensetzung und/oder durch ein erfindungsgemäßes Verfahren hergestellt ist.

Ferner betrifft die vorliegende Erfindung eine Alkali-Schwefel-Zelle, insbesondere Lithium-Schwefel-Zelle, welche eine erfindungsgemäße Kathode umfasst. Derartige Alkali-Schwefel-Zelle, insbesondere Lithium-Schwefel-Zellen, können beispielsweise in Notebooks, PDAs, Tablet-Computern, Mobiltelefonen, elektronischen Büchern, Elektrowerkzeugen, Gartenwerkzeugen, Fahrzeugen, wie Hybrid-, Plug-in-Hybrid- und Elektrofahrzeugen, eingesetzt werden.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine herkömmliche Kathodenzusammensetzung einer Lithium-Schwefel-Zelle vor (links) und nach (rechts) der Zyklisierung; und
- Fig. 2: einen schematischen Querschnitt durch eine Ausführungsform einer erfindungsgemäßen Kathodenzusammensetzung vor (links) und nach (rechts) der Zyklisierung.

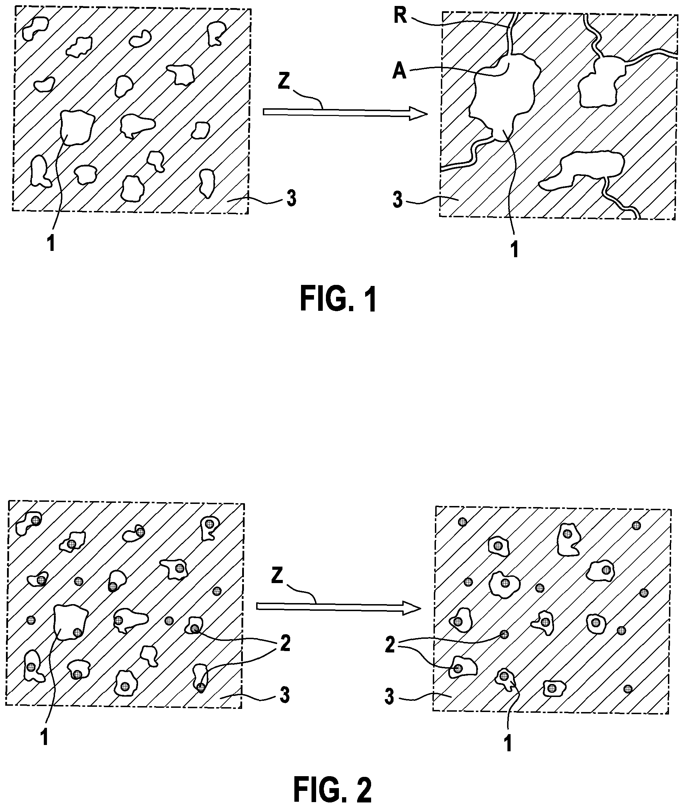

Figur 1 zeigt, dass herkömmliche Kathodenzusammensetzungen von Lithium-Schwefel-Zellen aus elementarem Schwefel 1 bestehen, welcher in einer Bindemittel-Leitzusatz-Matrix 3 eingelagert ist. Bei derartigen Kathodenzusammensetzungen bilden sich während der Zyklisierung Z Schwefelagglomerate A, welche mit zunehmender Zyklenzahl immer größer werden. Dies führt zu mechanischen Spannungen innerhalb der Kathode und schließlich zur Rissbildung R. Die daraus resultierende, schlechtere elektronische Kontaktierung geht mit einem Ansteigen des Zellwiderstandes und somit einer Absenkung der Zellspannung einher. Größere Schwefelpartikel reduzieren zudem die Schwefelausnutzung. Auf den großen Schwefelagglomeraten kann sich im Laufe des Entladevorgangs zudem eine isolierende Lithiumsulfidschicht (nicht dargestellt) bilden, welche die Nutzung des darunterliegenden Schwefels behindert beziehungsweise verhindert.

Figur 2 zeigt, dass im Rahmen dieser Ausführungsform einer erfindungsgemäßen Kathodenzusammensetzungen neben Partikeln aus elementarem Schwefel 1 auch Partikel aus einem kovalent und/oder ionisch gebundenen Schwefel aufweisenden Material 2 in einer Bindemittel-Leitzusatz-Matrix 3 homogen verteilt eingelagert sind. Das kovalent und/oder ionisch gebundenen Schwefel aufweisende Material kann beispielsweise ein Schwefel-Kompositwerkstoff, ein schwefelhaltiges Polymer, ein Metallsulfid, wie Nickelsulfid, oder ein Nichtmetallsulfid sein. Durch die Beimischung der Materialpartikel 2 werden Schwefelkeime im Nanometer und Subnanometerbereich in die Kathodenzusammensetzung eingebracht. Diese können vorteilhafterweise als Ausgangspunkt, insbesondere als Kristallisationskeime, für die Schwefelabscheidung während der Zyklisierung Z dienen. Dadurch kann erzielt werden, dass der Schwefel während der Zyklisierung Z homogen und in kleinen Partikeln abgeschieden wird.

### Beispiele

### Beispiel 1: Herstellung eines Schwefel-Polyacrylnitril-Kompositwerkstoffs

15 g elementarer Schwefel und 5 g Polyacrylnitril wurden gemischt und 6 Stunden lang auf 330 °C erhitzt. Der so hergestellte Schwefel-Polyacrylnitril-Kompositwerkstoff wies 40 Gew.-% Schwefel auf.

### Beispiel 2: Herstellung einer Kathodenzusammensetzung

5 g elementarer Schwefel und 1 g des Schwefel-Polyacrylnitril-Kompositwerkstoffs aus Beispiel 1 wurden zusammen mit N-Methyl-2-pyrrolidinon (NMP) in einem Speedmixer bei 10.000 Umdrehungen für 20 Minuten gerührt. Danach wurde 1 g Ruß (Super-P Li der Firma Timcal) zugegeben. Nach weiteren 20 Minuten Rührzeit wurden 1 g Graphit und 2 g PVDF zugegeben. Die Mischung wurde weitere 120 Minuten gerührt.

### Beispiel 3: Herstellung einer Kathode

Die Mischung aus Beispiel 2 wurde mit einem Rakel auf eine Aluminiumfolie aufgebracht. Danach wurde die Kathode zwei Stunden bei 60 °C auf einer Heizplatte getrocknet. Anschließend wurde die Anordnung in einen Vakuumofen überführt und weitere 12 Stunden bei 60 °C getrocknet.

Die resultierende Kathode wurde zu einer Lithium-Schwefel-Zelle verbaut. Die so hergestellte Lithium-Schwefel-Zelle wies eine homogene Schwefelverteilung beim Aufladevorgang auf.

## Patentansprüche

1. Kathodenzusammensetzung für eine Alkali-Schwefel-Zelle umfassend
- elementaren Schwefel (1) und
- mindestens einen, kovalent und/oder ionisch gebundenen Schwefel aufweisenden Polyacrylnitril-Schwefel-Kompositwerkstoff (2), **dadurch gekennzeichnet, dass** der Polyacrylnitril-Schwefel-Kompositwerkstoff (2) Schwefelbereiche mit einem Durchmesser von weniger als 1000 nm aufweist.

2. Kathodenzusammensetzung nach Anspruch 1, wobei der kovalent und/oder ionisch gebundenen Schwefel aufweisende Polyacrylnitril-Schwefel-Kompositwerkstoff (2) eine Primärpartikelgröße in einem Bereich von ≥ 5 nm bis ≤ 1000 nm aufweist.

3. Kathodenzusammensetzung nach einem der Ansprüche 1 bis 2, wobei der Schwefel des Polyacrylnitril-Schwefel-Kompositwerkstoff (2) in dem Polyacrylnitril-Schwefel-Kompositwerkstoff homogen verteilt vorliegt.

4. Kathodenzusammensetzung nach einem der Ansprüche 1 bis 3, wobei der Polyacrylnitril-Schwefel-Kompositwerkstoff, bezogen auf das Gesamtgewicht des Polyacrylnitril-Schwefel-Kompositwerkstoff, ≥ 5 Gew.-% bis ≤ 80 Gew.-% Schwefel umfasst.

5. Kathodenzusammensetzung nach einem der Ansprüche 1 bis 4, wobei die Kathodenzusammensetzung weiterhin
- mindestens ein Bindemittel (3) und/oder
- mindestens einen Leitzusatz (3) und/oder
- mindestens ein Lösungsmittel
umfasst.

6. Kathodenzusammensetzung nach einem der Ansprüche 1 bis 5, wobei die Kathodenzusammensetzung bezogen auf das Gesamtgewicht der Kathodenzusammensetzung
- ≥ 10 Gew.-% bis ≤ 80 Gew.-%, an elementarem Schwefel, und/oder
- ≥ 5 Gew.-% bis ≤ 50 Gew.-% an Bindemitteln, und/oder
- ≥ 5 Gew.-% bis ≤ 50 Gew.-% an Leitzusätzen, und/oder
- ≥ 0,1 Gew.-% bis ≤ 50 Gew.-% an kovalent und/oder ionisch gebundenen Schwefel aufweisenden Polyacrylnitril-Schwefel-Kompositwerkstoff und/oder
- ≥ 0 Gew.-% bis ≤ 50 Gew.-% an Lösungsmitteln
umfasst, wobei die Summe der Gewichtsprozentwerte von elementarem Schwefel, Bindemitteln, Leitzusätzen und kovalent und/oder ionisch gebundenen Polyacrylnitril-Schwefel-Kompositwerkstoffen und gegebenenfalls Lösungsmitteln insgesamt 100 Gewichtsprozent, bezogen auf das Gesamtgewicht der Kathodenzusammensetzung, ergibt.

7. Verfahren zur Herstellung einer Kathode für eine Alkali-Schwefel-Zelle umfassend die Verfahrensschritte:
a) Mischen von
- elementarem Schwefel,
- mindestens einem Bindemittel,
- mindestens einem kovalent und/oder ionisch gebundenen Schwefel aufweisenden Polyacrylnitril-Schwefel-Kompositwerkstoff,
- mindestens einem Leitzusatz und
- mindestens einem Lösungsmittel,
Bereitstellen einer lösungsmittelhaltigen Kathodenzusammensetzung nach einem der Ansprüche 1 bis 6,
b) Aufbringen der Zusammensetzung auf einen Stromableiter, und
c) Trocknen der Anordnung.

8. Kathode für eine Alkali-Schwefel-Zelle, enthaltend eine Kathodenzusammensetzung nach einem der Ansprüche 1 bis 6.

9. Alkali-Schwefel-Zelle umfassend eine Kathode nach Anspruch 8.

## Claims

1. Cathode composition for an alkali metal-sulfur cell comprising
- elemental sulfur (1) and
- at least one polyacrylonitrile-sulfur composite material (2) comprising covalently and/or ionically bound sulfur, **characterized in that** the polyacrylonitrile-sulfur composite material (2) has sulfur domains having a diameter of less than 1000 nm.

2. Cathode composition according to Claim 1, wherein the polyacrylonitrile-sulfur composite material (2) comprising covalently and/or ionically bound sulfur has a primary particle size in a range from ≥ 5 nm to ≤ 1000 nm.

3. Cathode composition according to either Claim 1 or 2, wherein the sulfur of the polyacrylonitrile-sulfur composite material (2) is homogeneously distributed in the polyacrylonitrile-sulfur composite material.

4. Cathode composition according to any of Claims 1 to 3, wherein the polyacrylonitrile-sulfur composite material comprises, based on the total weight of the polyacrylonitrile-sulfur composite material, from ≥ 5% by weight to ≤ 80% by weight of sulfur.

5. Cathode composition according to any of Claims 1 to 4, wherein the cathode composition further comprises
- at least one binder (3) and/or
- at least one conductive additive (3) and/or
- at least one solvent.

6. Cathode composition according to any of Claims 1 to 5, wherein the cathode composition comprises, based on the total weight of the cathode composition,
- from ≥ 10% by weight to ≤ 80% by weight of elemental sulfur and/or
- from ≥ 5% by weight to ≤ 50% by weight of binders and/or
- from ≥ 5% by weight to ≤ 50% by weight of conductive additives and/or
- from ≥ 0.1% by weight to ≤ 50% by weight of polyacrylonitrile-sulfur composite material comprising covalently and/or ionically bound sulfur and/or
- from ≥ 0% by weight to ≤ 50% by weight of solvents,
wherein the sum of the percentages by weight of elemental sulfur, binders, conductive additives and covalently and/or ionically bound polyacrylonitrile-sulfur composite materials and, if present, solvents is 100 per cent by weight in total, based on the total weight of the cathode composition.

7. Process for producing a cathode for an alkali metal-sulfur cell, comprising the following process steps:
a) mixing of
- elemental sulfur,
- at least one binder,
- at least one polyacrylonitrile-sulfur composite material comprising covalently and/or ionically bound sulfur,
- at least one conductive additive and
- at least one solvent,
Provision of a solvent-containing cathode composition according to any of Claims 1 to 6,
b) application of the composition to a power outlet lead and
c) drying of the arrangement.

8. Cathode for an alkali metal-sulfur cell, containing a cathode composition according to any of Claims 1 to 6.

9. Alkali metal-sulfur cell comprising a cathode according to Claim 8.

## Revendications

1. Composition de cathode pour une cellule alcali-soufre, comprenant :
- du soufre élémentaire (1) et
- au moins un matériau composite polyacrylonitrile-soufre (2) comprenant du soufre relié par une liaison covalente et/ou ionique, **caractérisée en ce que** le matériau composite polyacrylonitrile-soufre (2) comprend des zones de soufre ayant un diamètre inférieur à 1 000 nm.

2. Composition de cathode selon la revendication 1, dans laquelle le matériau composite polyacrylonitrile-soufre (2) comprenant du soufre relié par une liaison covalente et/ou ionique présente une taille de particule primaire dans une plage allant de ≥ 5 nm à ≤ 1 000 nm.

3. Composition de cathode selon la revendication 1 à 2, dans laquelle le soufre du matériau composite polyacrylonitrile-soufre (2) se présente sous forme distribuée de manière homogène dans le matériau composite polyacrylonitrile-soufre.

4. Composition de cathode selon l'une quelconque des revendications 1 à 3, dans laquelle le matériau composite polyacrylonitrile-soufre comprend, par rapport au poids total du matériau composite polyacrylonitrile-soufre, ≥ 5 % en poids à ≤ 80 % en poids de soufre.

5. Composition de cathode selon l'une quelconque des revendications 1 à 4, dans laquelle la composition de cathode comprend en outre :
- au moins un liant (3) et/ou
- au moins un additif conducteur (3) et/ou
- au moins un solvant.

6. Composition de cathode selon l'une quelconque des revendications 1 à 5, dans laquelle la composition de cathode comprend, par rapport au poids total de la composition de cathode :
- ≥ 10 % en poids à ≤ 80 % en poids de soufre élémentaire, et/ou
- ≥ 5 % en poids à ≤ 50 % en poids de liants, et/ou
- ≥ 5 % en poids à ≤ 50 % en poids d'additifs conducteurs, et/ou
- ≥ 0,1 % en poids à ≤ 50 % en poids de matériau composite polyacrylonitrile-soufre comprenant du soufre relié par une liaison covalente et/ou ionique, et/ou
- ≥ 0 % en poids à ≤ 50 % en poids de solvants,
la somme des valeurs de pourcentage en poids de soufre élémentaire, de liants, d'additifs conducteurs et de matériaux composites polyacrylonitrile-soufre comprenant du soufre relié par une liaison covalente et/ou ionique, et éventuellement de solvants étant au total de 100 pour cent en poids, par rapport au poids total de la composition de cathode.

7. Procédé de fabrication d'une cathode pour une cellule alcali-soufre, comprenant les étapes de procédé suivantes :
a) le mélange de :
- soufre élémentaire,
- au moins un liant,
- au moins un matériau composite polyacrylonitrile-soufre comprenant du soufre relié par une liaison covalente et/ou ionique,
- au moins un additif conducteur et
- au moins un solvant,
la préparation d'une composition de cathode contenant un solvant selon l'une quelconque des revendications 1 à 6,
b) l'application de la composition sur un collecteur de courant, et
c) le séchage de l'agencement.

8. Cathode pour une cellule alcali-soufre, contenant une composition de cathode selon l'une quelconque des revendications 1 à 6.

9. Cellule alcali-soufre comprenant une cathode selon la revendication 8.
